# EUROPÄISCHE PATENTSCHRIFT

(11) **EP 0 600 284 B1**
(45) Veröffentlichungstag und Bekanntmachung des Hinweises auf die Patenterteilung: **26.03.1997**
(21) Anmeldenummer: 93118351.1
(22) Anmeldetag: 12.11.1993
(51) Int. Cl.: E04D 3/36, E04D 5/14, E04F 13/08, F16B 27/00, F16B 15/08

(54) **Befestigungselement**
Fastening element
Elément de fixation

(30) Priorität: 03.12.1992 DE 4240605
(43) Veröffentlichungstag der Anmeldung: 08.06.1994
(73) Patentinhaber: HARDO-BEFESTIGUNGEN GMBH, 79312 Emmendingen (DE)
(72) Erfinder: Kraft, Franz, Dipl.-Ing., D-59757 Arnsberg (DE); Bertaggia, Josef, D-46562 Voerde (DE); Kraft, Gottfried, Dipl.-Ing., D-59757 Arnsberg (DE)
(74) Vertreter: Fritz, Edmund Lothar, Dipl.-Chem.

(56) Entgegenhaltungen:
- EP-A- 0 278 934
- WO-A-88/05487
- DE-A- 2 617 911
- DE-U- 9 015 403
- FR-A- 2 076 467
- FR-A- 2 283 351
- US-A- 4 121 715

## Beschreibung

Die vorliegende Erfindung betrifft ein Befestigungselement, insbesondere für die Befestigung einer Dämmschicht oder von Dachabdichtungsbahnen an einer Unterkonstruktion, umfassend ein Halteteil mit einem Teller und einem daran angeformten Schaft mit einer Hülsenbohrung und eine in die Unterkonstruktion einschraubbare Schraube, die in der Hülsenbohrung des Schafts des Halteteils axial verschiebbar aufgenommen ist und deren Kopf nach dem Einschrauben an einer Widerlagerfläche des Halteteils zur Anlage kommt. Ein derartiges Befestigungselement ist beispielsweise aus der DE-PS 26 17 911 bekannt. Befestigungselemente dieser Art werden nach dem Stand der Technik von Hand montiert. Es sind auch bereits für die Anbringung dieser Befestigungselemente geeignete Schraubautomaten bekannt geworden, in die jedoch die aus Halteteil und Schraube vormontierten Befestigungselemente in der Regel einzeln eingelegt werden müssen, so daß diese Schraubautomaten keine ausreichend rationelle Anbringung dieser Befestigungselemente zulassen. Außerdem hat es sich als nachteilig erwiesen, daß die Schraube in der Hülsenbohrung des Halteteils nach der Vormontage in axialer Richtung beweglich und somit nicht gegen ein Herausfallen gesichert ist.

Die EP-A 2 78 934 beschreibt ein Befestigungselement, das nicht der eingangs genannten Gattung entspricht. Es handelt sich bei diesem Befestigungselement um einen Nagel, der in der Regel aus Metall besteht und der einen tellerartigen Kopf aufweist, der z. B. mit einer Ausnehmung so ausgebildet ist, daß er mit dem Schaft eines weiteren Nagels dieser Art verbindbar ist und damit eine Kette von gestaffelten derartigen Befestigungselementen geknüpft werden kann. Die Ausnehmungen in dem tellerartigen Kopf des Befestigungselements können verschiedene Formen aufweisen und zum Rand des Kopfs hin offen sein. Bei diesen bekannten Befestigungselementen ist das Lösen eines Befestigungselements aus der Kette nur durch einen Schlag auf den Kopf des auszuknüpfenden Befestigungselements möglich, wodurch eine axiale Gleitbewegung gegenüber dem benachbarten

Befestigungselement erzielt wird und die beiden Befestigungselemente sich voneinander lösen. Das Lösen der Verbindung ist deshalb nur auf diese Weise möglich, weil das Befestigungselement aus einem starren unnachgiebigen Material besteht.

Die Aufgabe der vorliegenden Erfindung besteht somit darin, ein zweiteiliges Befestigungselement der eingangs genannten Gattung zu schaffen, bei dem sich Schraube und Halteteil in vormontierter Form zügig und rationell mittels eines für diese Befestigungselemente konstruierten Automaten verarbeiten lassen, ohne daß die Gefahr besteht, daß die Schraube aus dem Halteteil herausfällt, wobei das Ausknüpfen eines Halteteils aus der Kette durch eine radiale Bewegung zur Seite hin beziehungsweise eine Schwenkbewegung aus seiner Verbindung mit dem Schaft des benachbarten Halteteils möglich ist.

Die Lösung dieser Aufgabe liefert ein erfindungsgemäßes Befestigungselement der eingangs genannten Gattung mit den kennzeichnenden Merkmalen des Hauptanspruchs. Dadurch, daß die Befestigungselemente untereinander verbindbar sind und eine Kette bilden, wird die Verarbeitung in einem Schraubautomaten wesentlich erleichtert.

Die Verknüpfung zweier Halteteile erfolgt radial, wobei der Teller eines Halteteils wenigstens eine zum Rand hin offene Ausnehmung aufweist, in die der Schaft eines weiteren Halteteils radial einschiebbar ist. Dabei ist es allerdings notwendig, daß die Ausnehmung soweit geschlossen ist, daß sie den Schaft des anderen Halteteils unverlierbar umfaßt. Die Ausnehmung ist im Umriß teilkreisförmig und beschreibt vorzugsweise in etwa einen Dreiviertelkreis, die Ausnehmung kann aber auch eine ovale Form haben. Der Teller des Halteteils ist aus einem Material mit einer gewissen Elastizität geformt, z. B. aus Kunststoff, so daß der Schaft des anderen Halteteils nach Art einer Rastverbindung in die Ausnehmung des benachbarten Halteteils radial eindrückbar ist, wobei sich eine wieder lösbare formschlüssige Verbindung ergibt. Es versteht sich, daß dabei ein Kunststoff geeigneter Härte und Stabilität zu verwenden ist, damit der Teller des Halteteils die für die Anbringung einer Dämmmschicht erforderliche Festigkeit bewahrt.

Gemäß einer bevorzugten Ausführungsform der Erfindung ist der Teller des Halteteils so mit dem Schaft des anderen Halteteils einer Kette verbunden, daß die Hülsenbohrung des unten liegenden Halteteils durch den Teller des oben liegenden Halteteils abgedeckt wird. Dadurch ist gewährleistet, daß die Schraube, die sich nach der Vormontage bereits in der Hülsenbohrung des Halteteils befindet, nicht aus dem Halteteil herausfallen kann.

Es hat sich als besonders vorteilhaft erwiesen, daß man bei der erfindungsgemäßen Verknüpfung der Befestigungselemente untereinander diese selbst verknüpft und dazu nicht auf zusätzliche Verbindungselemente zurückgreift. Derartige Verbindungselemente, wie man sie zum Beispiel bei der Vergurtung einfacher Schrauben oder Nägel verwendet, sind nämlich bei der anschließenden weitgehend automatischen Verarbeitung der Befestigungselemente hinderlich. Außerdem müssen solche Verbindungselemente anschließend entsorgt werden.

Die in den Unteransprüchen genannten Merkmale betreffen bevorzugte Weiterbildungen der erfindungsgemäßen Lösung.

Im folgenden wird die vorliegende Erfindung anhand eines Ausführungsbeispiels unter Bezugnahme auf die beiliegenden Zeichnungen näher beschrieben. Dabei zeigen
- Fig. 1: ein erfindungsgemäßes Befestigungselement in der Ansicht;
- Fig. 2: das Halteteil im vertikalen Schnitt;
- Fig. 3: eine Draufsicht auf das Halteteil gemäß Fig. 2;
- Fig. 4: eine vergrößerte Detailansicht gemäß dem Ausschnitt IV von Fig. 2;
- Fig. 5: eine Reihe miteinander verketteter Befestigungselemente;
- Fig. 6: eine Draufsicht auf eine Kette von Befestigungselementen gemäß Fig. 5;
- Fig. 7: eine Draufsicht auf ein Halteteil gemäß einer Alternative der Erfindung.
- Fig. 8: eine vergrößerte Detailansicht gemäß dem Ausschnitt VIII von Fig. 2.

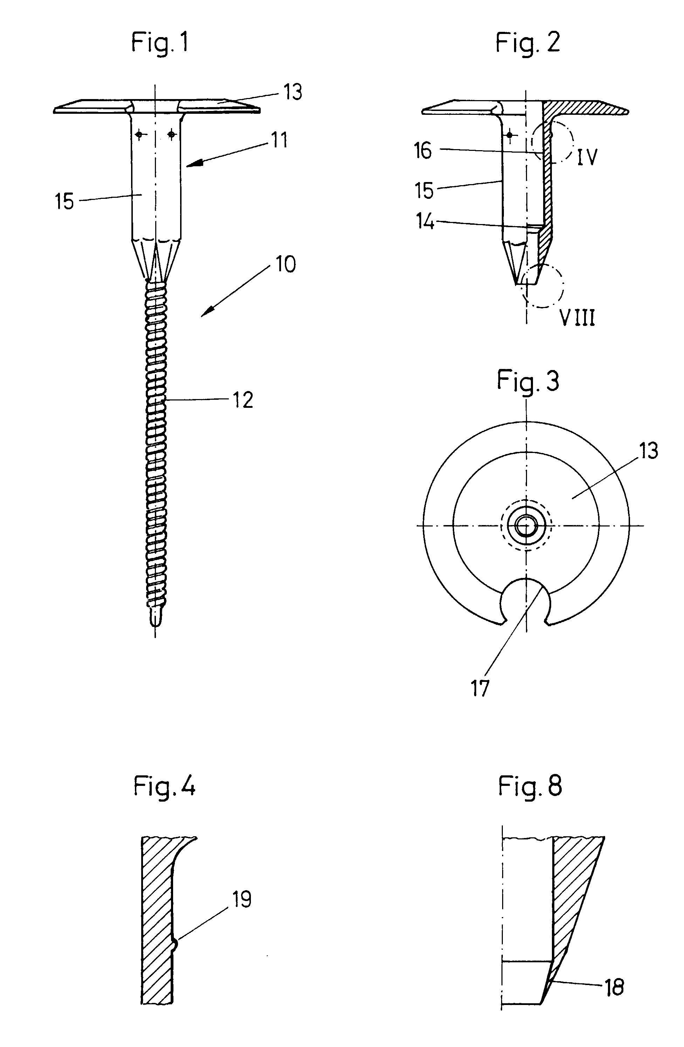

Ein erfindungsgemäßes Befestigungselement 10 gemäß Fig. 1 besteht aus einem Halteteil 11 aus Kunststoff und einer Schraube 12, deren Kopf im Schaft des Halteteils gehalten ist. Die Schraube 12 wird in einer Unterkonstruktion zum Beispiel eines Flachdachs befestigt. Das Halteteil 11 weist einen Teller 13 auf, der eine Dämmschicht (nicht dargestellt) des Flachdachs festhält. Bei Tritt auf den Teller 13 durch Begehung des Flachdachs kann die Schraube 12 sich in der Hülsenbohrung 14 des Halteteils 11 axial nach oben verschieben.

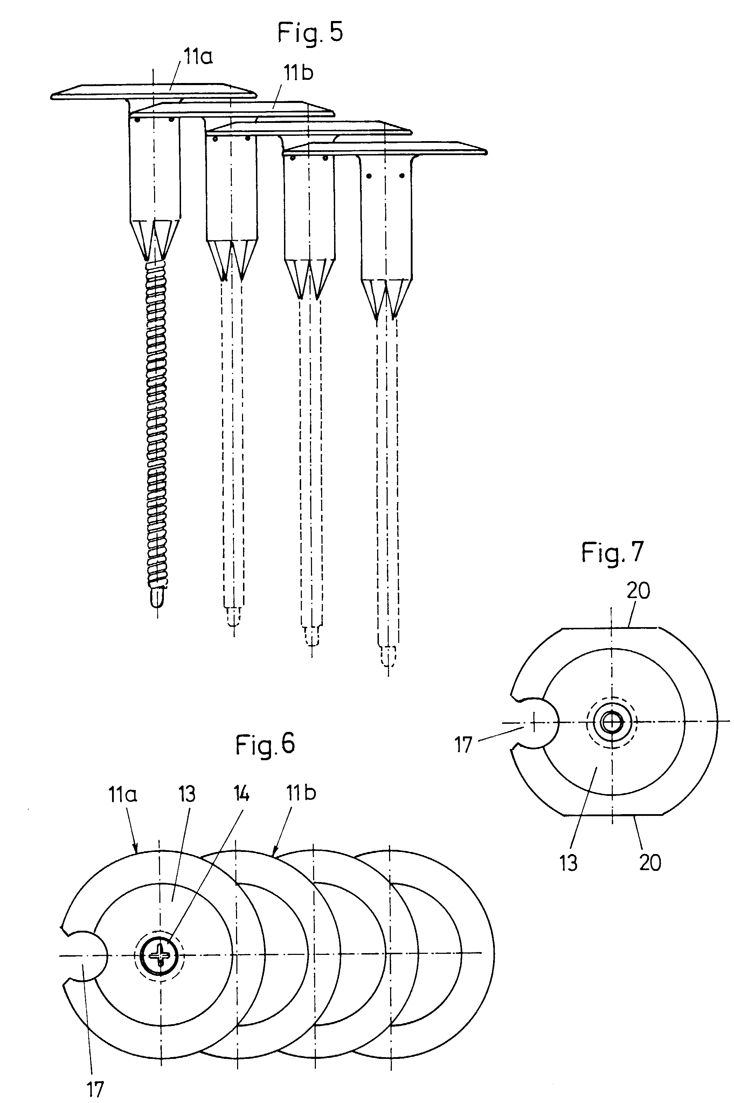

Das Halteteil ist in den Fig. 2 bis 4 näher dargestellt. Der Schaft 15 des Halteteils weist eine nach oben offene zentrische Hülsenbohrung 14 auf, die sich in ihrem unteren Abschnitt verjüngt, so daß eine konische Auflagefläche 16 gegeben ist, die als Widerlager für den Kopf der Schraube 12 dient. Der Teller 13 weist, wie man aus Fig. 3 sieht, eine zum Rand hin offene Ausnehmung 17 auf, die teilkreisförmig ist und in ihrem Durchmesser etwa dem Außendurchmesser des Schafts 15 des Halteteils im oberen Bereich entspricht. Durch diese Ausnehmung 17 ist es möglich, jeweils zwei oder mehrere Halteteile 11a, 11b miteinander zu verketten, so daß sie eine Reihe bilden, in der die Teller jeweils benachbarter Halteteile schuppenartig sich überlappen und die Schäfte parallel ausgerichtet sind, so wie dies in den Fig. 5 und 6 dargestellt ist. Durch die Anordnung der Ausnehmung 17 ist die Überlappung jeweils benachbarter Halteteile 11a, 11b der Kette so, daß der Teller des einen Halteteils den darunterliegenden Teller des benachbarten Halteteils jeweils soweit überlappt, daß die Hülsenbohrung 14 des untenliegenden Halteteils durch den Teller des obenliegenden Halteteils abgedeckt wird. Dadurch wird erreicht, daß die bereits in die Hülsenbohrung 14 des Halteteils 11a, 11b eingeführte Schraube 12 nach der Vormontage nicht herausfallen kann. Gemäß der Darstellung nach Fig. 8 kann im unteren Endbereich im verjüngten Teil der Hülsenbohrung eine Schwimmhaut 18 an der Innenseite des Schafts 15 am Halteteil angespritzt sein, um dadurch nach der Vormontage den Schaft der Schraube 12 festzuhalten, so daß die Schraube sich nicht innerhalb der Hülsenbohrung 14 auf- und abbewegen kann.

Fig. 4 zeigt ein weiteres Detail des Schafts 15. Demgemäß weist dieser im oberen Bereich an seiner Außenseite mehrere über den Umfang verteilt angeordnete Nocken 19 oder eine umlaufende Wulst auf. Die Ausnehmung des benachbarten Halteteils in der Kette greift um den Schaft 15 des Befestigungselements oberhalb der Nocken 19. Dadurch wird verhindert, daß die miteinander verknüpften Halteteile einer Kette sich in axialer Richtung (Schaftrichtung) am Schaft gegeneinander verschieben, denn die Ausnehmung 17 des benachbarten Halteteils kann sich nicht über den Nocken 19 hinaus am Schaft 15 des Halteteils nach unten bewegen. Durch diese Maßnahme wird auch die Kette der Halteteile stabiler.

Fig. 7 zeigt eine Draufsicht auf den Teller 13 eines Halteteils gemäß einer Weiterbildung der Erfindung. Es kann erforderlich sein, die Halteteile auf einem Flachdach alle in gleicher Richtung auszurichten. Dazu weist der Teller 13 gemäß Fig. 7 zwei parallele gegenüberliegende Führungsebenen 20 auf, die sich durch einen geraden Anschnitt des im übrigen kreisbogenförmigen Umrisses des Tellers ergeben. Diese Führungsebenen 20 erleichtern die gleichmäßige Ausrichtung der Teller 13 durch eine entsprechende Anlagevorrichtung am Schraubautomaten (nicht dargestellt), mittels dessen die Befestigungselemente 10 auf dem Flachdach angebracht werden. Der Schraubautomat weist auch eine Einrichtung zur Abtrennung jeweils eines einzelnen Befestigungselements aus der Kette auf, die Gegenstand einer separaten Patentanmeldung der Anmelderin ist.

## Patentansprüche

1. Befestigungselement, insbesondere für die Befestigung einer Dämmschicht oder von Dachabdichtungsbahnen an einer Unterkonstruktion, umfassend ein Halteteil mit einem Teller und einem daran angeformten Schaft mit einer Hülsenbohrung und eine in die Unterkonstruktion einschraubbare Schraube, die in der Hülsenbohrung des Schafts des Halteteils axial verschiebbar aufgenommen ist und deren Kopf nach dem Einschrauben an einer Widerlagerfläche des Halteteils zur Anlage kommt, dadurch gekennzeichnet, daß der Teller (13) des Halteteils eines Befestigungselements mit dem Schaft (15) des Halteteils eines weiteren Befestigungselements verbindbar und damit die Befestigungselemente über die Halteteile (11) zu einer Kette verknüpfbar sind,
wobei der Teller (13) des Halteteils (11) wenigstens eine zum Rand hin offene Ausnehmung (17) aufweist, die im Umriß teilkreisförmig ist und soweit geschlossen ist, daß sie geeignet ist, den Schaft(15) eines weiteren Halteteils unverlierbar zu umfassen
und wobei der Teller (13) des Halteteils (11) aus einem Material solcher Elastizität geformt ist, daß der Schaft (15) eines Halteteils nach Art einer Rastverbindung in die Ausnehmung (17) des benachbarten Halteteils radial eindrückbar ist, wobei sich eine wieder lösbare formschlüssige Verbindung ergibt.

2. Befestigungselement nach Anspruch 1, dadurch gekennzeichnet, daß der Teller (13) des Halteteils (11) eine oder mehrere Ausnehmungen (17) aufweist, deren Durchmesser wenigstens dem Durchmesser des Schafts (15) des Halteteils (11) entspricht.

3. Befestigungselement nach einem der Ansprüche 1 oder 2, dadurch gekennzeichnet, daß benachbarte Halteteile (11a, 11b) einer Kette so verknüpft sind, daß der Teller (13) des einen Halteteils (11a) den darunterliegenden Teller des benachbarten Halteteils (11b) soweit überlappt, daß die Hülsenbohrung (14) des untenliegenden Halteteils durch den Teller des obenliegenden Halteteils abgedeckt wird.

4. Befestigungselement nach einem der Ansprüche 1 bis 3, dadurch gekennzeichnet, daß am Schaft (15) des Halteteils (11) im oberen Bereich außenseitig mehrere über den Umfang verteilt angeordnete Nocken (19) oder eine umlaufende Wulst angeformt ist.

5. Befestigungselement nach einem der Ansprüche 1 bis 4, dadurch gekennzeichnet, daß im unteren Endbereich der Hülsenbohrung (14) des Halteteils (11) eine Schwimmhaut (18) angespritzt ist.

6. Befestigungselement nach einem der Ansprüche 1 bis 5, dadurch gekennzeichnet, daß der Teller (13) des Halteteils (11) wenigstens eine Führungsebene (10) aufweist.

## Claims

1. Fastening element, in particular for fastening an insulating layer or roof tightening courses at a substructure, comprising a holding part with a dish and a shaft formed integrally therewith having a socket bore and a screw able to be screwed into the substructure which is received in an axially shiftable manner in the socket bore of the shaft of the holding part, the head thereof resting against a supporting face of the holding part after screwing in, characterised in that the dish (13) of the holding part of a fastening element can be connected to the shaft (15) of the holding part of another fastening element, thus the fastening elements being able to be connected by means of the holding parts (11) so as to form a chain,
the dish (13) of the holding part (11) comprises at least one recess (17) open towards the edge which has the contour of a divided circle and is closed to such an extent that it is suited to embrace the shaft (15) of another holding part in an undetachable manner,
the dish (13) of the holding part (11) is made of a material having such an elasticity that the shaft (15) of a holding part is able to be pressed radially into the recess (17) of the adjacent holding part in the manner of a click-stop connection, thus forming a positve connection which is releasable again.

2. Fastening element as claimed in claim 1, characterised in that the dish (13) of the holding part (11) comprises one or more recesses (17) the diameter of which corresponds at least to the diameter of the shaft (15) of the holding part (11).

3. Fastening element as claimed in one of claims 1 or 2, characterised in that adjacent holding parts (11a, 11b) of a chain are linked to each other in such a manner that the dish (13) of the one holding part (11a) projects over the subjacent dish of the adjacent holding part (11b) to such an extent that the socket bore (14) of the lower holding part is covered by the dish of the upper holding part.

4. Fastening element as claimed in any one of claims 1 to 3, characterised in that at the shaft (15) of the holding part (11) there are integrally formed in the upper region on the outside several cams (19) distributed over the circumference or a circumferential bead.

5. Fastening element as claimed in any one of claims 1 to 4, characterised in that in the lower end region of the socket bore (14) of the holding part (11) there is molded a float skin (18).

6. Fastening element as claimed in any one of claims 1 to 5, characterised in that the dish (13) of the holding part (11) comprises at least one guiding plane (10).

## Revendications

1. Elément de fixation, notamment pour la fixation d'une couche isolante ou de matériaux d'étanchéité du toit à une infrastructure, élément comportant un élément de support avec un plateau et une tige avec une forure en douille y formée et avec une vis pouvant être vissée dans l'infrastructure, vis qui est logée à glissement axial dans la forure en douille de la tige de l'élément de support et dont la tête, après vissage, vient d'appliquer sur une surface d'appui de l'élément de support,
caractérisé par le fait que le plateau (13) de l'élément de support d'un élément de fixation peut être connecté à la tige (15) de l'élément de support d'un autre élément de fixation et que dès lors les éléments de fixation peuvent, par l'intermédiaire des éléments de support (11) être réunis en chaîne,
où le plateau (13) de l'élément de support (11) présente au moins un évidement (17) ouvert en direction du bord, évidement à contour en forme de segment de cercle et fermé à un degré tel qu'il est apte à enserrer à l'abri de la perte la tige (11) d'un autre élément de support,
et où le plateau (13) de l'élément de support (11) est formé en un matériau d'une élasticité telle que la tige (15) d'un élément de support peut à la manière d'une liaison par encliquetage être introduit sous pression radiale dans l'évidement (17) de l'élément de support contigu, ce qui donne naissance à une jonction par similarité de forme que l'on peut défaire.

2. Elément de fixation suivant la revendication 1, caractérisé en ce que le plateau (13) de l'élément de support (11) présente un ou plusieurs évidements (17), dont le diamètre correspond au moins au diamètre de la tige (15) de l'élément de support (11).

3. Elément de support suivant l'une des revendications 1 ou 2, caractérisé en ce que des éléments de support contigus (lla, llb) d'une chaîne sont connectés de manière telle que le plateau (13) d'un élément de support (lla) chevauche le plateau sous-jacent de l'élément de support contigu (11b) à un degré tel que la forure en douille (14) de l'élément de support sous-jacent est recouvert par le plateau de l'élément de support supérieur.

4. Elément de fixation suivant l'une quelconque des revendications de 1 à 3, caractérisé par le fait que sur la zone supérieure de la tige (15) de l'élément de support (11) sont formées plusieurs cames (19) distribuées sur la périphérie ou est formé un bourrelet périphérique.

5. Elément de fixation suivant l'une quelconque des revendications de 1 à 4, caractérisé par le fait que sur la zone terminale de la forure en douille (14) de l'élément de support (11) est fixé par extrusion ou moulage une pellicule flexible (18).

6. Elément de fixation suivant l'une quelconque des revendications de 1 à 5, caractérisé par le fait que le plateau (13) de l'élément de support (11) présente au moins un plan de guidage (10).
